# EUROPÄISCHE PATENTANMELDUNG

(11) **EP 0 579 912 A2**
(43) Veröffentlichungstag der Anmeldung: **26.01.1994**
(21) Anmeldenummer: 93107326.6
(22) Anmeldetag: 06.05.1993
(51) Int. Cl.: H02H 3/00, H02J 13/00, H01H 9/16

(54) **Überwachungseinrichtung für mehrere elektrische Schalter**

(30) Priorität: 23.07.1992 DE 4224266
(71) Anmelder: SECATEC GmbH Berührungslose Schalttechnik, D-57581 Katzwinkel (DE)
(72) Erfinder: Brüser, Martin, W-5963 Wenden 2 (DE); Hils, Rudolf, W-5240 Alsdorf (DE)
(74) Vertreter: Cohausz & Florack Patentanwälte

(57) **Zusammenfassung**

Die Erfindung betrifft eine Überwachungseinrichtung für mehrere elektrische Schalter mit induktiven, kapazitiven, optischen oder mechanischen Sensoren. An zwei Versorgungsleitungen (2a, 2b) einer auf verschiedene Spannungen umschaltbaren Strom- und Spannungsquelle (1) sind über eine Strommeßeinrichtung (4) parallel mehrere gleichartige Abfrageeinrichtungen (3₁ bis 3ₙ) für die verschiedenen Schalter (4, 5) angeschlossen. Jede Abfrageeinrichtung (3₁ bis 3ₙ) umfaßt einen adressierbaren Zähler (8), der durch Umschalten der Spannungsquelle (1) auf verschiedene Spannungsniveaus auf den Ausgangszählwert setzbar ist und zurückzählbar ist. An den Versorgungsleitungen (3₁, 3₂) liegt ein aus zwei parallelen Zweigen bestehender Strommeßkreis (14a, 14b), der in Abhängigkeit vom Schaltzustand des angesprochenen Schalters (5) einen mehr oder weniger großen Strom zieht, der durch eine Auswerte- und Steuerschaltung (5) erfaßt wird.

## Beschreibung

Die Erfindung betrifft eine Überwachungseinrichtung für mehrere elektrische Schalter mit induktiven, kapazitiven, optischen oder mechanischen Sensoren, bei der an den Versorgungsleitungen einer Spannungsquelle eine Strommeßeinrichtung für den über die Versorgungsleitungen zugeführten Strom angeschlossen ist, deren Meßergebnis einer Auswerte- und Steuereinrichtung zugeführt wird.

Eine solche Überwachungseinrichtung ist aus der DE 34 24 294 A1 bekannt. Bei dieser Überwachungseinrichtung sind die einzelnen Schalter Teil sogenannter Meldegeräte, die in Serienschaltung über eine zweiadrige Leitungsschleife derart an einer Auswerte- und Steuereinrichtung angeschlossen sind, daß mittels Steuerimpulse relaisgesteuerte Schalter in Verbindung mit Zeitgliedern nacheinander die einzelnen Meldegeräte zur Auswerte- und Steuereinrichtung durchschalten. Die Zeitglieder müssen also unter Berücksichtigung des Zyklusses der Abfrage der einzelnen Meldegeräte das und die abgefragten Meldegeräte so lange für die Abfrage sperren, bis daß alle Meldegeräte abgefragt sind. Sollen neue Meldegeräte angeschlossen werden, dann muß der Zeittakt der Zeitglieder entsprechend angepaßt werden. Neben dieser Schwierigkeit bietet die bekannte Einrichtung nicht die Möglichkeit der Unterscheidung verschiedener Fehlerquellen bei der Auswertung, z.B. nach Kabelbruch, Kurzschluß oder defektem Schalter.

Bei einer anderen bekannten Überwachungseinrichtung für mehrere elektrische Schalter (DE 26 54 026 A1) sind den zu überwachenden Schaltern adressierbare Zähler zugeordnet. Die einzelnen Schalter mit ihren Zählern sind an individuellen Versorgungsleitungen, Steuerleitungen und Rückmeldeleitungen angeschlossen. Der schaltungstechnische Aufwand ist deshalb erheblich. Hinzu kommt, daß auch in diesem Fall eine Unterscheidung zwischen verschiedenen Fehlerarten des Schalters nicht vorgesehen ist.

Bei einer anderen bekannten Einrichtung zum individuellen Ein- und Ausschalten von Verbrauchern (DE 34 37 042 C2) ist jedem Verbraucher eine Steuerschaltung zugeordnet, die bei einem bestimmten Niveau der an ihr anliegenden Spannung und einer bestimmten Dauer dieser Schaltung auf den Schaltzustand des Verbrauchers ändernd einwirkt. Dieser Steuerkreis beeinflußt außerdem einen Signalgeber, der an eine Zentrale den Schaltzustand des Verbrauchers meldet. Der Schaltzustand eines einzelnen Verbrauchers wird also nur gemeldet, so lange ein entsprechendes Spannungssignal zum Ändern des Schaltzustandes des Verbrauchers anliegt.

Eine Abfrage ohne Änderung des Schaltzustandes des Verbrauchers ist somit nicht möglich.

Ausgehend von einer Überwachungseinrichung der eingangs genannten Art liegt der Erfindung die Aufgabe zugrunde, diese hinsichtlich der Überwachungsqualität zu verbessern, ohne daß dadurch der Aufwand für die Einrichtung im Vergleich zum Stand der Technik erhöht wird.

Diese Aufgabe wird durch folgende Merkmale gelöst:
1. An den Versorgungsleitungen der Strom- und Spannungsquelle ist eine Strommeßeinrichtung für den über die Versorgungsleitungen zugeführten Strom angeschlossen, deren Meßergebnisse der Auswerte- und Steuereinrichtung zugeführt werden.
2. An den Versorgungsleitungen der Strom- und Spannungsquelle sind parallel zueinander mehrere gleichartige, adressierbare Zähler umfassende Abfrageeinrichtungen für die Schalter angeschlossen, die jeweils in Abhängigkeit vom Schaltzustand der Schalter einen kleineren oder größeren Strom ziehen.
3. Jeder Zähler ist durch von den verschiedenen Spannungen an den Versorgungsleitungen abgeleitete Steuersignale auf eine individuelle Adresse setzbar und zurückzahlbar und liefert bei Erreichen seiner Adresse ein Ausgangssignal.
4. Jede Abfrageeinrichtung weist einen an den Versorgungsleitungen angeschlossenen Meßstromkreis auf, der in Abhängigkeit von dem Ausgangssignal des Zählers und einem von dem diesem Zähler zugeordneten Schalter gelieferten Signal auf den kleineren oder größeren Strom schaltbar ist.

Bei der erfindungsgemäßen Überwachungseinrichtung werden die Versorgungsleitungen der Spannungsquelle gleichzeitig für die Erfassung des Schaltzustandes der einzelnen Schalter herangezogen. Dies ist deshalb möglich, weil in Abhängigkeit vom Schaltzustand eines jeden Schalters mit der Strommeßeinrichtung der vom Schaltzustand der einzelnen Schalter abhängige Strompegel erfaßt wird. Zusätzliche Überwachungsleitungen werden also nicht gebraucht. Auch werden keine zusätzlichen Steuerleitungen für den Zähler benötigt, da aus den Spannungssignalen der verschiedenen auf die Versorgungsleitungen gelegten Spannungen die entsprechenden Steuersignale für den Zähler gebildet werden. Auch läßt sich problemlos die Anzahl der zu überwachenden Schalter verändern, ohne daß es notwendig ist, an den bereits an der Überwachungseinrichtung angeschlossenen Abfrageeinrichtungen etwas zu ändern, was beim gattungsgleichen Stand der Technik wegen der Zeitglieder problematisch ist.

Nach einer Ausgestaltung der Erfindung kann dem Meßstromkreis ein weiterer Meßstromkreis parallel geschaltet sein, der in Abhängigkeit von dem Ausgangssignal des Zählers zuschaltbar ist.

Nach einer Ausgestaltung der Erfindung kann der Meßstromkreis aus zwei parallelen Zweigen bestehen, von denen der eine in Abhängigkeit vom Ausgangssignal des Zählers und der andere in Abhängigkeit von dem Ausgangssignal des Zählers sowie dem Signal des ihm zugeordneten Schalters zuschaltbar ist.

Um bei unterschiedlich vielen zu überwachenden Schaltern mit gleicher Empfindlichkeit den Schaltzustand der einzelnen Schalter überwachen zu können, ist nach einer Ausgestaltung der Erfindung vorgesehen, daß die Strommeßeinrichtung für den Ruhestrom, der über die Versorgungsleitungen bei nicht adressierten Zählern fließt, auf Null setzbar ist.

Im folgenden wird ein Ausführungsbeispiel der Erfindung anhand einer Zeichnung näher erläutert. Im einzelnen zeigen:
- Fig. 1: ein Blockschaltbild der Überwachungseinrichtung und
- Fig. 2: einen Auszug aus dem Blockschaltbild gemäß Fig. 1 in Form eines detaillierten Blockschaltbildes einer Abfrageeinrichtung.

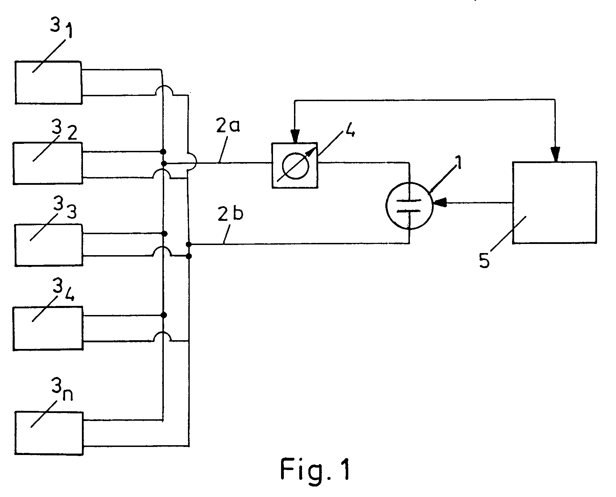

Gemäß Figur 1 sind an einer Spannungsquelle 1 über Versorgungsleitungen 2a, 2b mehrere gleichartige Abfrageeinrichtungen 3₁ bis 3ₙ parallel angeschlossen. In der Versorgungsleitung 2a liegt eine Strommeßeinrichtung 4. Die Meßergebnisse der Strommeßeinrichtung 4 werden an eine Auswerteeinrichtung 5 geliefert, die eine Steuereinrichtung umfaßt, die die Spannungsquelle 1 für die verschiedenen Spannungsniveaus, z.B. 30 V, 15 V und 8 V, ansteuert. Die Auswerte- und Steuereinrichtung 5 kann in Abhängigkeit von dem Meßergebnis der Strommeßeinrichtung 4 diese für einen bestimmten Strom, und zwar dem Ruhestrom der Abfrageeinrichtungen 3₁ bis 3ₙ auf Null setzen.

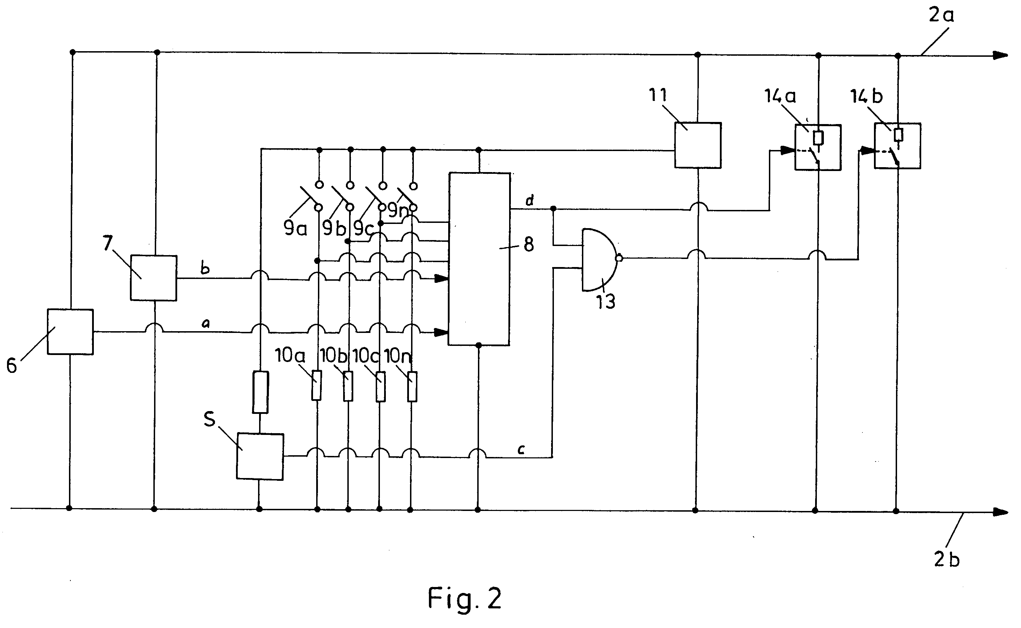

Jede der Abfrageeinrichtungen 3₁ bis 3ₙ hat den in Figur 2 dargestellten Aufbau. Sie dient zur Überprüfung des Schaltzustandes eines elektrischen Schalters S mit induktivem, kapazitivem, optischem oder mechanischem Sensor. An den Versorgungsleitungen 2a, 2b sind zwei Steuersignalgeber 6, 7 angeschlossen, die auf verschiedene Spannungsniveaus ansprechen und Steuersignale an einen Zähler 8 liefern. Der Zähler 8 ist mittels Schaltkontakten 9a, 9b ... 9n, die in Reihe mit Widerständen 10a, 10b ... 10n an einer über die Versorgungsleitungen 2a, 2b versorgten stabilisierten Spannungsquelle 11 liegen, auf eine bestimmte Adresse setzbar.

An den Versorgungsleitungen 2a, 2b liegt ein aus zwei parallelen Zweigen 14a, 14b bestehender Strommeßkreis. Der Ausgang des Zählers 8 ist zum einen unmittelbar mit einem Steuereingang des ersten Zweiges 14a des Strommeßkreises und zum anderen mittelbar über ein Und-Glied 13 mit einem Steuereingang des zweiten Zweiges 14b des Strommeßkreises verbunden. Der weitere Steuereingang des Und-Gliedes 13 ist mit dem Ausgang des zu überwachenden Schalters S verbunden.

Die Funktion der beschriebenen Überwachungseinrichtung ist folgende:
Sobald die eine Betriebsspannung von 30 V liefernde Spannungsquelle 1 auf den untersten Spannungswert von z.B. 8 V geschaltet wird, spricht der Signalgeber 6 an und gibt ein Steuersignal an den Zähler 8, wodurch dieser Zähler 8 auf den Ausgangszählwert gestellt wird. Dies geschieht bei allen angeschlossenen Abfrageeinrichtungen 3₁, 3₂... 3ₙ. Die Zähler 8 liefern dann das Ausgangssignal Null. Nach Schalten auf die Betriebsspannung von 30 V wird mittels der Strommeßeinrichtung 4 nur die Summe der in allen Abfrageeinrichtungen 3₁, 3₂ ... 3ₙ fließenden Ruheströme gemessen, da in diesem Fall die beiden Zweige 14a, 14b der Strommeßschaltung nicht durchgeschaltet sind. Für diesen Summenruhestrom wird mit der Auswerte- und Steuerschaltung 5 die Strommeßeinrichtung 4 auf Null geschaltet.

Um den auf eine bestimmte Adresse gesetzten Zähler 8 anzuwählen, wird die Spannung an den Versorgungsleitungen 2a, 2b wieder umgeschaltet, und zwar in diesem Fall auf den mittleren Spannungspegel von z.B. 15 V und anschließend wieder auf 30 V. Bei jedem dieser Schaltvorgänge werden die Zähler aller Abfrageeinrichtungen 3₁, 3₂ ... 3ₙ um einen Zählwert zurückgezählt. Sobald für einen Zähler 8 der Zählwert Null erreicht ist, liefert er ein Ausgangssignal d an den ersten Zweig 14a des Strommeßkreises. Die Abfrageeinrichtung 3₁, 3₂ oder 3ₙ zieht also einen Strom, der von der Strommeßeinrichtung 4 erfaßt und in der Auswerte- und Steuereinrichtung 5 entsprechend registriert und gegebenenfalls verarbeitet wird. Sofern bei Erreichen der Adresse des Zählers 8 auch der zugeordnete Schalter S aktiviert ist, liefert auch er ein Ausgangssignal c, das zusammen mit dem Ausgangssignal d des Zählers 8 über das Und-Glied 13 den zweiten Zweig 14b der Strommeßeinrichtung ansteuert und diesen Zweig 14b durchschaltet. Die Folge ist, daß die Abfrageeinrichtung 3₁, 3₂ oder 3ₙ einen noch höheren Strom zieht. An diesem höheren Strom erkennt die Auswerte- und Steuereinrichtung 5, daß der Schalter 5 aktiviert ist. Diese Abfrage findet nacheinander an allen Abfrageeinrichtungen 3₁, 3₂ ... 3ₙ statt und läßt sich mit einer hohen Folgefrequenz von einigen kHz durchführen. Die Größe des Stromes ist dabei unabhängig von der Art des eingesetzten elektrischen Schalters S.

Da der Meßstrom in den beiden Zweigen 14a, 14b aufgrund der Dimensionierung dieser Zweige bekannt ist, läßt sich über die Größe des gemessenen Stroms bei angewähltem Zähler 8 auch eine Aussage über eventuelle Fehler der Schaltung machen. Bei angewähltem Zähler 8 muß nämlich der Strom im Meßstromkreis mindestens gleich dem Strom im ersten Zweig 14a sein und darf nicht größer als der Summenstrom in beiden Zweigen 14a, 14b sein. Sofern der Strom kleiner als der Strom im ersten Zweig 14a ist, liegt entweder ein Kabelbruch oder eine falsch angewählte Adresse vor. Ist der Strom größer als der Summenstrom beider Zweige 14a, 14b, dann liegt entweder ein Kurzschluß oder ein defekter Schalter 6 vor.

## Patentansprüche

1. Überwachungseinrichtung für mehrere elektrische Schalter (S) mit induktiven, kapazitiven, optischen oder mechanischen Sensoren, bei der an Versorgungsleitungen (2a, 2b) einer Spannungsquelle (1) eine Strommeßeinrichtung (4) für den über die Versorgungsleitungen (2a, 2b) zugeführten Strom angeschlossen ist, deren Meßergebnis einer Auswerte- und Steuereinrichtung (5) zugeführt wird, gekennzeichnet durch folgende Merkmale:
1. Die Spannungsquelle (1) ist auf verschiedene Spannungen durch die Auswerte- und Steuereinrichtung (5) umschaltbar.
2. An den Versorgungsleitungen (2a, 2b) der Spannungsquelle (1) sind parallel zueinander mehrere gleichartige, adressierbare Zähler (8) umfassende Abfrageeinrichtungen 3₁, 3₂, 3₃ ... 3ₙ, 6-14b) angeschlossen, die jeweils in Abhängigkeit vom Schaltzustand der Schalter (5) einen kleineren oder größeren Strom ziehen.
3. Jeder Zähler (8) ist durch von den verschiedenen Spannungen an den Versorgungsleitungen (2a, 2b) abgeleitete Steuersignale (a, b) auf eine individuelle Adresse setzbar und zurückzählbar und liefert bei Erreichen seiner Adresse ein Ausgangssignal.
4. Jede Abfrageeinrichtung weist einen an den Versorgungsleitungen (2a, 2b) angeschlossenen Meßstromkreis (14b) auf, der in Abhängigkeit von dem Ausgangssignal (d) des Zählers (8) und einem von diesem Zähler (8) zugeordneten Schalter (S) gelieferten Signal (c) auf den kleineren oder größeren Strom schaltbar ist.

2. Überwachungseinrichtung nach Anspruch 1, **dadurch gekennzeichnet**, daß dem Meßstromkreis (14b) ein weiterer Meßstromkreis (14a) parallel geschaltet ist, der in Abhängigkeit von dem Ausgangssignal (d) des Zählers (8) zuschaltbar ist.

3. Überwachungseinrichtung nach Anspruch 1, **dadurch gekennzeichnet,** daß die Strommeßeinrichtung (4) für den Ruhestrom, der über die Versorgungsleitungen (2a, 2b) bei nicht adressierten Zählern (8) fließt, auf Null setzbar ist.
